# EUROPEAN PATENT APPLICATION

(11) **EP 4 691 444 A1**
(43) Date of publication of application: **11.02.2026**
(21) Application number: 23934185.2
(22) Date of filing: 12.05.2023
(51) Int. Cl.: A61H 1/02, B25J 9/00

(54) **REHABILITATION TRAINING METHOD AND REHABILITATION TRAINING DEVICE**

(30) Priority: 19.04.2023 KR 20230051556
(71) Applicant: P&S Robotics Co., Ltd., Seoul 07294 (KR)
(72) Inventor: PARK, Kwang Hun, Seoul 04153 (KR); LEE, Kyung Hwan, Anyang-Si, Gyeonggi-do 14096 (KR)
(74) Representative: Michalski Hüttermann & Partner Patentanwälte mbB
(86) International application number: PCT/KR2023/006444
(87) International publication number: WO 2024/219537

(57) **Abstract**

The present invention relates to a rehabilitation training method and a rehabilitation training device, which control provided driving force of a driving part provided at a joint part, so as to adjust the displacement and speed of the joint part. The rehabilitation training method may comprise steps in which: a rehabilitation trainee wears a rehabilitation training robot having at least one joint part, and interacting force between the rehabilitation trainee and the rehabilitation training robot is obtained while the joint part is driven by the driving part; the characteristics of the interacting force are classified by analyzing the interacting force; and the provided driving force of the driving part provided at the joint part is controlled according to the characteristics of the interacting force.

## Description

### TECHNICAL FIELD

The present invention relates to a rehabilitation training method and a rehabilitation training device, and more particularly, to a rehabilitation training method and a rehabilitation training device, which control provided driving force of a driving part provided at a joint part to adjust a displacement and speed of the joint part.

### BACKGROUND ART

Recently, with the expansion of supply of rehabilitation training robots, cases of rehabilitation training for rehabilitation treatment of the disabled or patients being performed using rehabilitation training robots are increasing. As these rehabilitation training robots become more widespread, technologies related to the rehabilitation training robots to assist the rehabilitation training are also being actively developed.

In the related art, many rehabilitation training robots that are designed to perform specific operations repeatedly without evaluating or analyzing conditions of the rehabilitation trainee with a simple structure were distributed. However, recently, there has been a trend toward developing two-way (or interactive) rehabilitation training robots that perform optimized rehabilitation training to improve rehabilitation effects based on analysis of the conditions of the rehabilitation trainee.

However, in the case of the technologies related to the rehabilitation training robots that were developed to actively assist rehabilitation in consideration of a rehabilitation status of the rehabilitation trainee, not only they are limited in generality as they are only applied to specific rehabilitation training, but also they are limited in that they are only rudimentary technologies that do not sufficiently consider subtle changes during the rehabilitation training, such as the interacting force between the rehabilitation trainee and the rehabilitation training robot.

(Patent Document 1) Korean Patent Publication No. 10-2022-0072026

### DISCLOSURE OF THE INVENTION

### TECHNICAL PROBLEM

The present invention provides a rehabilitation training method and a rehabilitation training device that control provided driving force of a driving part provided to a joint part according to characteristics of interacting force between a rehabilitation trainee and a rehabilitation training robot.

### TECHNICAL SOLUTION

A rehabilitation training method may include obtaining interacting force between a rehabilitation trainee and a rehabilitation training robot while the rehabilitation trainee wears the rehabilitation training robot having at least one joint part and the joint part is driven by a driving part; classifying characteristics of the interacting force by analyzing the interacting force; and controlling provided driving force of the driving part provided at the joint part according to the characteristics of the interacting force.

The step of obtaining the interacting force may include a step of driving the joint part to move along a preset target trajectory of the joint part, and in the step of controlling the provided driving force of the driving part, the provided driving force of the driving part may be controlled so that the movement of the joint part follows the target trajectory.

The obtaining the interacting force may include: measuring a position of the joint part being driven; and calculating the interacting force using a difference between a position of the target trajectory and an actually measured position at each time point.

The measuring the position of the joint part may include: measuring a position of the joint part at a first time point; and measuring a position of the joint part at a second time point after the first time point, and the calculating the interacting force may include: calculating required driving force of the joint part at a first time between the first time point and the second time point by using the position of the joint part at the second time point; and subtracting the provided driving force of the driving part from the required driving force of the joint part at the first time.

The first time may range of 1 *µ*s to 10 ms.

The classifying the characteristics of the interacting force may include: analyzing a direction and magnitude of the interacting force; and determining the interacting force as active or resistant by comparing the direction of the interacting force with a driving direction of the joint part.

The controlling the provided driving force of the driving part may include: providing the provided driving force of the driving part that decreases rather than set driving force at each time point, when the interacting force is determined as the active; and providing the provided driving force of the driving part that increases rather than the set driving force at each time point, when the interacting force is determined as the resistant.

The providing the provided driving force of the driving part that decreases rather than the set driving force at each time point may include decreasing by the interacting force from the set driving force at each time point, and the providing the provided driving force of the driving part that increases rather than the set driving force at each time point may include increasing by the interacting force from the set driving force at each time point.

A rehabilitation training device according to another embodiment of the present invention may include: a rehabilitation training robot comprising at least one joint part and a driving part configured to drive the joint part, the rehabilitation training robot being worn by a rehabilitation trainee; an interaction measuring part configured to obtain interacting force between the rehabilitation trainee and the rehabilitation training robot; a characteristic analysis part configured to analyze the interacting force and classify characteristics of the interacting force; and a driving force control part configured to control provided driving force of the driving part, which is provided to the joint part, according to the characteristics of the interacting force.

The rehabilitation training device may further include a trajectory setting part configured to set a target trajectory of the joint part along which the joint part moves, wherein the driving force control part may be configured to control the provided driving force of the driving part so that the movement of the joint part follows the target trajectory.

The interaction measuring part may include: a position measuring part configured to measure a position of the joint part driven along the target trajectory; and an action force calculating part configured to calculate the interacting force using a difference between a position of the target trajectory and an actually measured position at each time point.

The position measuring part may be configured to measure positions of the joint part at a first time point and a second time point after the first time point, and the action force calculating part may be configured to calculate required driving force of the joint part at a first time between the first time point and the second time point using the position of the joint part at the second time point and to calculate the interacting force by subtracting the provided driving force of the driving part from the required driving force of the joint part at the first time.

The rehabilitation training device may further include: a frictional force calculating part configured to calculate frictional force according to a speed of the joint part; and a gravity calculating part configured to calculate gravity acting on the joint part according to the movement of the joint part, wherein the trajectory setting part may be configured to set set driving force at each time point by reflecting at least one of the frictional force, the gravity, inertial force, or deflecting force, which is generated according to the movement of the joint part at each time point, and the action force calculating part may be configured to calculate the interacting force by reflecting at least one of the frictional force, the gravity, the inertial force and the deflecting force.

The position measuring part may measure the position of the joint part at a cycle of 1 *µ*s to 10 ms.

The characteristic analysis part may include: an action force analysis part configured to analyze a direction and magnitude of the interacting force; and a characteristic determining part configured to compare the direction of the interacting force with a driving direction of the joint part to determine the interacting force as active or resistant.

The driving force control part may be configured to: allow the provided driving force of the driving part to decrease rather than set driving force at each time point, when the interacting force is determined as the active; and allow the provided driving force of the driving part to increase rather than the set driving force at each time point, when the interacting force is determined as the resistant.

The driving force control part may be configured to allow the provided driving force of the driving part to decrease or increase by the interacting force than the set driving force at each time point.

### ADVANTAGEOUS EFFECTS

The rehabilitation training method according to the embodiment of the present invention may analyze the interacting force between the rehabilitation trainee and the rehabilitation training robot to classify the characteristics of the interacting force, and control the driving force provided to the driving part provided to the joint part according to the characteristics of the interacting force, and thus, even if the rehabilitation trainee applies the force (or the applied force) to the joint part, the joint part may move along the preset target trajectory of the joint part, and accordingly, the rehabilitation training may be performed with the training intention of the rehabilitation trainee may be considered to improve the rehabilitation effect.

In addition, the position of the joint part driven to move along the target trajectory through the position measuring part may be measured to detect that the joint part is deviated from the target trajectory, and thus, the driving force provided by the driving part may be compensated and changed (or corrected) so that the movement of the joint part follows the target trajectory, thereby providing the optimal rehabilitation training and maximizing the rehabilitation effect.

In addition, since the interacting force is obtained without the torque sensor only by measuring the position of the joint part by the position measuring part, not only the manufacturing cost of the rehabilitation training device may be reduced, but also the torque sensor, which is relatively larger in volume and/or heavier than the position sensor used in the position measuring part, may be unnecessary to be mounted on the rehabilitation training robot, and thus, the volume and/or weight of the rehabilitation training robot may be reduced, and the calibration process due to the use of the torque sensor may be eliminated. That is, the interacting force may be obtained only by measuring the position of the joint part by the position measuring part to reflect the measured interacting force in real time in the control of the driving force provided by the driving part, thereby providing the optimal driving force provided by the driving part to the joint part according to the force applied to the joint part by the rehabilitation trainee so that the movement of the joint part follows the target trajectory.

Particularly, the rehabilitation training device of the present invention may include the frictional force generating part and the gravity calculating part to reflect the frictional force and/or the gravity in the setting of the driving force at each time point and the calculation of the interacting force, thereby enabling the joint part to move in the optimized trajectory for the various rehabilitation trainees, and further improving the rehabilitation effect by providing the more optimized rehabilitation training.

### BRIEF DESCRIPTION OF THE DRAWINGS

FIG. 1 is a flowchart illustrating a rehabilitation training method according to an embodiment of the present invention.
FIG. 2 is a conceptual view for explaining a target trajectory of a joint part according to an embodiment of the present invention.
FIG. 3 is a conceptual view for explaining a difference between a position of a target trajectory and an actually measured position according to an embodiment of the present invention.
FIG. 4 is a schematic view of a rehabilitation training device according to another embodiment of the present invention.

### MODE FOR CARRYING OUT THE INVENTION

Hereinafter, specific embodiments will be described in more detail with reference to the accompanying drawings. The present invention may, however, be embodied in different forms and should not be construed as limited to the embodiments set forth herein. Rather, these embodiments are provided so that this invention will be thorough and complete, and will fully convey the scope of the present invention to those skilled in the art. In the descriptions, the same elements are denoted with the same reference numerals. In the figures, the dimensions of layers and regions are exaggerated for clarity of illustration. Like reference numerals refer to like elements throughout.

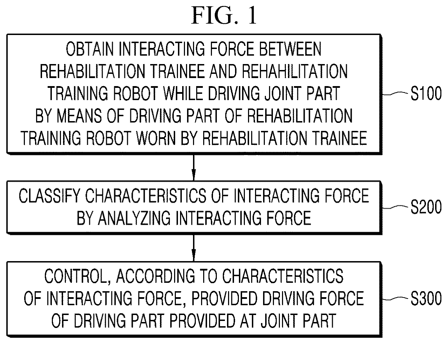

FIG. 1 is a flowchart illustrating a rehabilitation training method according to an embodiment of the present invention.

Referring to FIG. 1, a rehabilitation training method according to an embodiment of the present invention may include: a step (S100) in which a rehabilitation trainee wears a rehabilitation training robot having at least one joint part, and interacting force between the rehabilitation trainee and the rehabilitation training robot is obtained while the joint part is driven by the driving part; a step (S200) of classifying characteristics of the interacting force by analyzing the interacting force; and a step (S300) of controlling provided driving force of the driving part provided at the joint part according to the characteristics of the interacting force.

First, the rehabilitation trainee wears a rehabilitation training robot having at least one joint part and acquires interacting force between the rehabilitation trainee and the rehabilitation training robot while driving the joint part using the driving part (S100). The rehabilitation trainee may perform rehabilitation training by wearing the rehabilitation training robot, and during the rehabilitation training, the rehabilitation trainee's force (or applied force) may be applied to the joint part of the rehabilitation training robot to prevent the joint part of the rehabilitation training robot from moving along a target trajectory set for the rehabilitation trainee, thereby preventing effective rehabilitation training from being performed.

Here, the rehabilitation training robot may have at least one joint part and may move by driving the joint part by the driving part to assist the rehabilitation training of the rehabilitation trainee. For example, the rehabilitation training robot may be a walking practice robot and may have two or more joint parts, and the joint parts may include a hip joint part provided corresponding to a hip joint of the rehabilitation trainee and a knee joint part provided corresponding to a knee joint of the rehabilitation trainee. In addition, the joint part may further include an ankle joint part provided corresponding to an ankle joint of the rehabilitation trainee. The rehabilitation training robot may move by changing an angle (or joint angle) of the joint part through the driving of the joint part, and the position of the joint part may be changed according to the movement of the rehabilitation training robot.

The rehabilitation trainee may obtain (or measure) the interacting force between the rehabilitation trainee and the rehabilitation training robot while driving the joint part by the driving part in the state of wearing the rehabilitation training robot, and the interacting force between the rehabilitation trainee and the rehabilitation training robot may be obtained (in real time) while the rehabilitation trainee performs the rehabilitation training. Here, the interacting force may be the sum (vector) of the driving force provided by the driving part to the joint part and the force applied by the rehabilitation trainee to the joint part.

Next, the interacting force is analyzed to classify the characteristics of the interacting force (S200). The interacting force may be analyzed to classify the characteristics of the interacting force, the interacting force may be classified into active and resistive (or passive), and the force applied by the rehabilitation trainee to the joint part may be classified according to the effect on the movement of the rehabilitation training robot. For example, when the force applied by the rehabilitation trainee to the joint part assists the movement of the joint part to move along the target trajectory, it may be determined as the active, and when the force hinders the movement of the joint part to prevent the joint part from moving along the target trajectory, it may be determined as the resistive.

Then, the provided driving force of the driving part provided to the joint part is controlled according to the characteristics of the interacting force (S300). The provided driving force of the driving part provided to the joint part may be controlled according to the characteristics of the interacting force, and the joint part may be suppressed or prevented from moving along the target trajectory due to the force applied to the joint part by the rehabilitation trainee. For example, in order to allow the joint part to move along the target trajectory, set driving force to be provided to the joint part at each time point may be preset, and the driving force provided by the driving part may be added to or subtracted from the set driving force according to the characteristics of the interacting force, and thus, the force applied by the rehabilitation trainee to the joint part may be offset to allow the joint part to move along the target trajectory.

Thus, in the rehabilitation training method according to the present invention, the interacting force between the rehabilitation trainee and the rehabilitation training robot may be analyzed to classify the characteristics of the interacting force, and the driving force provided to the driving part provided to the joint part may be controlled according to the characteristics of the interacting force, and thus, even if the rehabilitation trainee applies the force to the joint part, the joint part may move along a preset target trajectory of the joint part, and accordingly, the rehabilitation training may be performed with the training intention of the rehabilitation trainee may be considered to improve the rehabilitation effect.

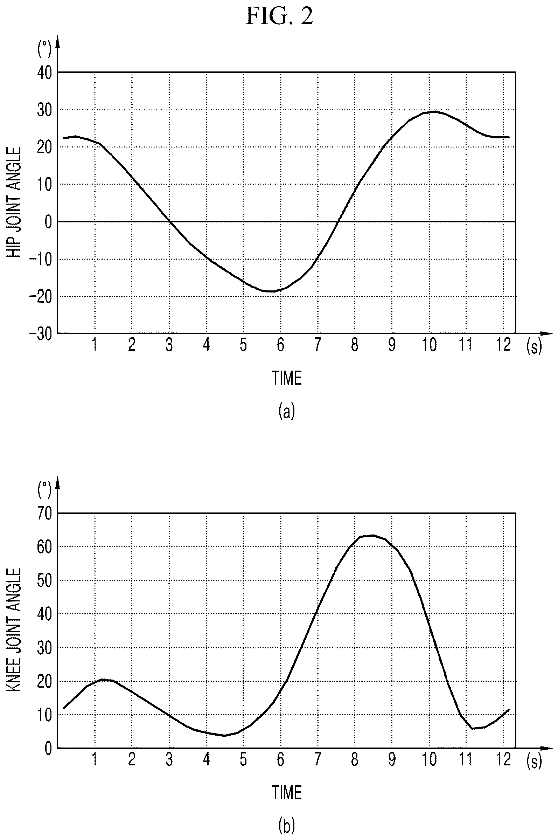

FIG. 2 is a conceptual view for explaining the target trajectory of the joint part according to an embodiment of the present invention, (a) of FIG. 2 illustrates a target trajectory of the hip joint part, and (b) of FIG. 2 illustrates a target trajectory of the knee joint part.

Referring to FIG. 2, the target trajectory of the joint part may be preset, and the step (S100) of obtaining the interacting force may include the step (S110) of driving the joint part to move along the preset target trajectory of the joint part.

The joint part may be driven to move along the preset target trajectory of the joint part (S110). The target trajectory of the joint part optimized for the rehabilitation trainee may be preset, and the joint part may be driven so that the joint part moves along the preset target trajectory of the joint part. Here, the joint part may be driven according to the driving force provided by the driving part provided to the joint part, and the joint part may be driven by providing the preset driving force at each time point so that the joint part moves along the target trajectory of the joint part, and when the force of the rehabilitation trainee is not applied to the joint part, the joint part may move along the target trajectory of the joint part.

In addition, in the step (S300) of controlling the driving force provided by the driving part, the driving force provided by the driving part may be controlled so that the movement of the joint part follows the target trajectory. While the driving force provided by the driving part is controlled, the movement of the joint part may follow the target trajectory, and the interacting force may be analyzed to compensate the driving force provided by the above driving part according to the force applied to the joint part by the rehabilitation trainee. This may improve the effects of the rehabilitation by providing effective rehabilitation training.

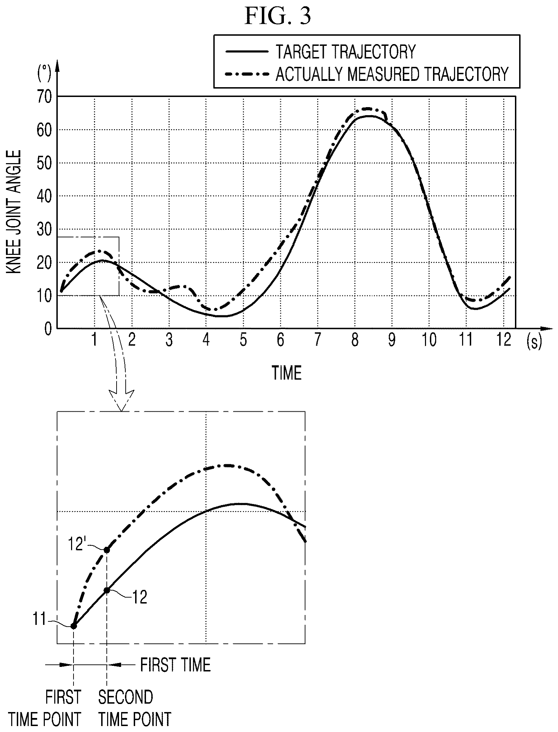

FIG. 3 is a conceptual view for explaining a difference between a position of the target trajectory and an actually measured position according to an embodiment of the present invention.

Referring to FIG. 3, the step (S100) of obtaining the interacting force may include: a step (S110) of measuring the position of the joint part being driven; and a step (S120) of calculating the interacting force using the difference between the position of the target trajectory and the actually measured position at each time point.

The position of the joint part driven to move along the target trajectory may be measured (S110). The position of the joint part driven to move along the target trajectory may be measured through the position measuring part to detect that the joint part is deviated from the target trajectory due to an external force, such as the force applied to the joint part by the rehabilitation trainee while the joint part is driven and also to compensate for and change (correct) the driving force provided by the driving part so that the movement of the joint part follows the target trajectory according to the difference in position from the target trajectory at each time point (or at the same time point). Thus, the optimal rehabilitation training may be provided, and the rehabilitation effect may be maximized.

In addition, the interacting force may be calculated by using the difference between the position of the target trajectory and the actually measured position at each time point (S120). The position of the above joint may be measured to confirm the actually measured position, and the interacting force may be calculated by using the difference between the position of the target trajectory and the actually measured position at each time point, and also, the interacting force may be obtained even without a torque sensor. Thus, the manufacturing cost of the rehabilitation training device for the rehabilitation training method of the present invention may be reduced, and the torque sensor, which is relatively larger in volume and/or heavier than the position sensor used in the position measuring part, may be unnecessary to be mounted on the rehabilitation training robot, and thus, the volume and/or weight of the rehabilitation training robot may be reduced, and the calibration process due to the use of the torque sensor may be eliminated.

Here, the position of the joint part may be measured at regular intervals (or times) through the position measuring part, and displacement of the joint part may be obtained during a time (or in a section) between a previous time point (or cycle) and a current time point by the difference between the position of the joint part at the previous time point and the position of the joint part at the current time point, and also, a speed of the joint part may be obtained during the time between the previous time point and the current time point by dividing the displacement of the joint part by the cycle (i.e., time). In addition, the speed of the joint part may be (further) divided by the cycle to calculate acceleration of the joint part during the time between the previous time point and the current time point.

Here, the force, which substantially (or actually) acts (or is applied) to the joint part to allow the joint part to move from the position of the joint part at the previous time point to the position of the joint part at the current time point by including the driving force provided by the driving part, may be obtained as a function (or formula) related to the acceleration of the joint part, a magnitude (of the force) may be calculated using the acceleration of the joint part, and a direction (of the force) may be known by the displacement of the joint part with respect to an x-axis, a y-axis, and a z-axis. In addition, the interacting force may be obtained as the difference between the force actually applied to the joint and the driving force provided by the driving part.

As illustrated in the partial enlarged view of FIG. 3, the step (S110) of measuring the position of the joint part may include: a step (S111) of measuring a position of the joint part at a first time point; and a step (S112) of measuring a position of the joint part at a second time point after the first time point.

The position of the joint part at the first time point may be measured (S111). The position of the joint part at regular intervals may be measured through the position measuring part to measure the position of the joint part at the first time point.

In addition, the position of the joint part at the second time point after the first time point may be measured (S112). The position of the joint part may be measured at the second time point after one cycle (or the first time) at the first time point through the position measuring part.

In addition, the step (S120) of calculating the interacting force may include: a step (S121) of calculating the required driving force of the joint part at the first time between the first time point and the second time point using the position of the joint part at the second time point; and a step (S122) of subtracting the provided driving force of the driving part from the required driving force of the joint part at the first time point.

The required driving force of the joint part may be calculated at the first time between the first time point and the second time point by using the position of the joint point at the second time point (S121). The displacement of the joint part at the first time between the first time point and the second time point may be obtained by the difference between the position of the joint part at the second time and the position of the joint part at the first time point, the speed of the joint part at the first time may be obtained by dividing the displacement of the joint part by the first time, and the acceleration of the joint part at the first time may be obtained by dividing the speed of the joint part (again) by the first time.

The driving force required for the joint part at the first time between the first time point and the second time point may be force that is actually applied to the joint part to move from the position of the joint part at the first time point to the position of the joint part at the second time point and may be calculated as a function of the acceleration of the joint part at the first time.

Next, the driving force provided by the driving part may be subtracted from the driving force required by the joint part of the first time (S122). The interacting force may be obtained as the difference between the required driving force of the joint and the provided driving force of the driving part (or the driving force provided by the driving part), the provided driving force of the driving part may be subtracted from the required driving force of the joint at the first time, and the magnitude and direction of the interacting force may be calculated.

For example, if the interacting force is a positive (+) value, the direction may be the same as the driving force provided by the driving part, and if the interacting force is a negative (-) value, the direction may be opposite to that of the driving force provided by the driving part.

Here, the first time may be 1 µs to 10 µs. That is, the position of the joint part may be measured at very short intervals of 1 µs to 10 ms, and the interacting force may be calculated, and thus, the joint part may move continuously along the target trajectory, and the driving force of the driving part may be provided in real time at the next time (e.g., the second time) that is corrected (or changed) according to the calculated interacting force. As a result, the joint part may move without a large difference from the target trajectory, and an actually measured trajectory that has almost no difference from the target trajectory may be formed.

If the first time is shorter than 1 *µ*s, the time taken to measure only the position of the joint part so as to calculate (or obtain) the interacting force may not be secured, and thus, the driving force provided by the corrected driving part may not be provided at the next time, and if the first time is longer than 10 ms, a distance by which the position of the joint part is deviated from the target trajectory increases, and thus, not only a distance to be corrected (or compensated) may increase, but also the joint part may not have continuous (and/or smooth) movement.

Thus, in the rehabilitation training method according to the present invention, the position of the joint part driven to move along the target trajectory through the position measuring part may be measured to detect that the joint part is deviated from the target trajectory, and thus, the driving force provided by the driving part may be compensated and or corrected so that the movement of the joint part follows the target trajectory, thereby providing the optimal rehabilitation training and maximizing the rehabilitation effect. In addition, since the interacting force is obtained without the torque sensor only by measuring the position of the joint part by the position measuring part, not only the manufacturing cost of the rehabilitation training device may be reduced, but also the torque sensor, which is relatively larger in volume and/or heavier than the position sensor used in the position measuring part, may be unnecessary to be mounted on the rehabilitation training robot, and thus, the volume and/or weight of the rehabilitation training robot may be reduced, and the calibration process due to the use of the torque sensor may be eliminated.

The step (S200) of classifying the characteristics of the interacting force may include: a step (S210) of analyzing the direction and magnitude of the interacting force; and a step (S220) of determining the interacting force as the active or resistant by comparing the direction of the interacting force with a driving direction of the joint part.

The direction and magnitude of the interacting force may be analyzed (S210). The direction and magnitude of the interacting force may be known by a value obtained by calculating the interacting force, the direction of the interacting force may be known by the signs (+ or -) of the value obtained by calculating the interacting force, and the magnitude of the interacting force may be known by a magnitude (or absolute value) of the value obtained by calculating the interacting force. For example, if the value obtained by calculating the interacting force is a positive (+) value, the direction of the interacting force may be the same as the direction of the driving force provided by the driving part, and if the value obtained by calculating the interacting force is a negative (-) value, the direction of the interacting force may be opposite to the direction of the driving force provided by the driving part.

In addition, the direction of the interacting force may be compared with the driving direction of the joint to determine the interacting force as the active or the resistant (S220). The direction of the interacting force may be compared with the driving direction of the joint part (i.e., the direction of the driving force provided by the driving part) to determine whether the interacting force is the active or the resistant. If the direction of the interacting force is the same as the driving direction of the joint part, it may be determined as the active, and if the direction of the interacting force is different from the driving direction of the joint part, it may be determined as the resistant. Even if the direction of the interacting force is slightly different from the driving direction of the joint part, when the interacting force assists the movement of the joint part in the driving direction of the joint part, it may be determined as the active, and the direction and magnitude of the interacting force may be analyzed to determine whether the interacting force assists the movement of the joint part in the driving direction of the joint part.

The step (S300) of controlling the provided driving force of the driving part may include: a step (S310) of providing the provided driving force of the driving part that decreases rather than the set driving force at each time point, when the interacting force is determined as the active; and a step (S320) of providing the provided driving force of the driving part that increases rather than the set driving force at each time point, when the interacting force is determined as the resistant.

In the step (S220) of determining the interacting force as the active or the resistant, if the interacting force is determined as the active, the provided driving force of the driving part may be provided at a level less than that of the set driving force at each time point (S310). The set driving force that has to be provided to the joint part at each time point to allow the joint part to move along the target trajectory may be preset, and when the interacting force is the active, the rehabilitation trainee may provide force to the joint part in the driving direction of the joint part, and thus, the provided driving force of the driving part may decrease rather than the set driving force, and the provided driving force of the driving part that decreases rather than the set driving force may be provided to the joint part.

In addition, in the step (S220) of determining the interacting force as the active or the resistant, if the interacting force is determined as the resistant, the driving force provided by the driving part that increases rather than the set driving force at each time point may be provided (S320). When the interacting force is the resistant, since the force applied by the rehabilitation trainee to the joint part hinders the movement (or driving) of the joint part, the driving force provided by the driving part may increase rather than the set driving force to offset the force applied by the rehabilitation trainee to the joint part, thereby providing the driving force provided by the driving part, which increases rather than the set driving force, to the joint part.

Here, the step (S310) of providing the provided driving force of the driving part that decreases rather than the set driving force at each time point may include a step (S311) of decreasing by the interacting force from the set driving force at each time point, and the step (S320) of providing the provided driving force of the driving part that increases rather than the set driving force at each time point may include a step (S321) of increasing by the interacting force from the set driving force at each time point.

In the step (S310) of providing the provided driving force of the driving part that decreases rather than the set driving force at each time point, the provided driving force may decrease by (an amount of) the interacting force (rather) than the set driving force at each time point (S311). In the case in which the interacting force is the active, while the provided driving force of the driving part decreases rather than the set driving force, the provided driving force may decreases by the amount of the interacting force compared to the set driving force at each time point so that the (measured) position of the joint part at the next time point is the same as the position of the target trajectory at the time point (or the same time point).

In addition, in the step (S320) of providing the provided driving force of the driving part that increases rather than the set driving force at each time point, the provided driving force may increase by (the amount of) the interacting force (rather) than the set driving force at each time point (S321). In the case in which the interacting force is the resistant, while the provided driving force of the driving part increases rather than the set driving force, the provided driving force may increases by the amount of the interacting force compared to the set driving force at each time point so that the (measured) position of the joint part at the next time point is the same as the position of the target trajectory at the time point.

As a result, the joint part may move along the target trajectory as much as possible, and the joint part may form an actually measured trajectory that is almost (or very) similar to the target trajectory.

Thus, in the rehabilitation training method according to the present invention, the interacting force may be obtained only by measuring the position of the joint part by the position measuring part to reflect the measured interacting force in real time in the control of the driving force provided by the driving part, thereby providing the optimal driving force provided by the driving part to the joint part according to the force applied to the joint part by the rehabilitation trainee so that the movement of the joint part follows the target trajectory.

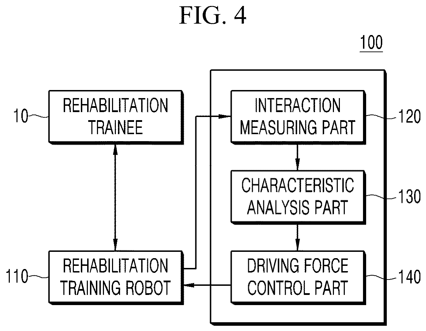

FIG. 4 is a schematic view of a rehabilitation training device according to another embodiment of the present invention.

Referring to FIG. 4, a rehabilitation training device according to another embodiment of the present invention will be described in more detail. However, any details duplicated with those described above in relation to the rehabilitation training method according to an embodiment of the present invention will be omitted.

A rehabilitation training device 100 according to another embodiment of the present invention may include: a rehabilitation training robot 110 worn by a rehabilitation trainee 10 and including at least one joint part and a driving part that drives the joint part; an interaction measuring part 120 that obtains interacting force between the rehabilitation trainee 10 and the rehabilitation training robot 110; a characteristic analysis part 130 that analyzes the interacting force to classify characteristics of the interacting force; and a driving force control part 140 that controls provided driving force of the driving part provided to the joint part according to the characteristics of the interacting force.

The rehabilitation training robot 110 may be worn by the rehabilitation trainee 10 to perform the rehabilitation training and may include at least one joint part and a driving part that drives the joint part. The joint part may be provided to correspond to the joint part of the rehabilitation trainee 10, and the number of joint part may be determined according to the number of joint parts of the rehabilitation trainee 10 to which the rehabilitation training robot 110 is mounted. For example, the rehabilitation training robot 110 may be a walking practice robot and may have two or more joint parts, and the joint parts may include a hip joint part provided corresponding to a hip joint of the rehabilitation trainee 10 and a knee joint part provided corresponding to a knee joint of the rehabilitation trainee 10. In addition, the joint part may further include an ankle joint part provided corresponding to an ankle joint of the rehabilitation trainee 10.

The driving part may drive the joint part, and the rehabilitation training robot 110 may move as an angle (or joint angle) of the joint part is changed through the driving of the joint part, and the position of the joint part may be changed according to the movement of the rehabilitation training robot 110. For example, the driving part may include an actuator and/or a motor, and driving force may be generated by supplying current, and magnitude of the driving force may be adjusted according to the amount of current.

The interaction measuring part 120 may obtain (or measure) the interacting force between the rehabilitation trainee 10 and the rehabilitation training robot 110 and may obtain the interacting force between the rehabilitation trainee 10 and the rehabilitation training robot 110 while driving the joint part by the driving part in the state in which the rehabilitation trainee 10 wears the rehabilitation training robot 110 and may obtain the interacting force between the rehabilitation trainee 10 and the rehabilitation training robot 110 (in real time) while the rehabilitation trainee 10 performs the rehabilitation training.

The characteristic analysis part 130 may analyze the interacting force to classify the characteristics of the interacting force, classify the interacting force into active and resistive (or passive), and classify the force applied by the rehabilitation trainee 10 to the joint part according to an effect on the movement of the rehabilitation training robot 110. For example, when the force applied by the rehabilitation trainee 10 to the joint part assists the movement of the joint part to move along the target trajectory, the characteristic analysis part 130 may determine the force as the active, and when the force hinders the movement of the joint part to prevent the joint part from moving along the target trajectory, the characteristic analysis part 130 may determine the force as the resistive.

The driving control part 140 may control the provided driving force of the driving part provided to the joint part according to the characteristics of the interacting force and may suppress or prevent that the joint part does not move along the target trajectory due to the force applied to the joint part by the rehabilitation trainee 10. For example, in order to allow the joint part to move along the target trajectory, set driving force to be provided to the joint part at each time point may be preset, and the driving force provided by the driving part may be added to or subtracted from the set driving force according to the characteristics of the interacting force, and thus, the force applied by the rehabilitation trainee 10 to the joint part may be offset to allow the joint part to move along the target trajectory. Here, the driving force control part 140 may control (or adjust) the driving force provided by the driving part by adjusting an amount of current supplied to the joint part (or the driving part).

The rehabilitation training device 100 according to the present invention may further include a trajectory setting part that sets a target trajectory of the joint part along which the joint part moves.

The trajectory setting part may set the target trajectory of the joint part, along which the joint part is to move, in advance and also set not only a target position (or path) of the joint part but also set driving force to be provided to the joint part at each time point.

In addition, the driving force control part 140 may control the driving force provided by the driving part so that the movement of the joint part follows the target trajectory. The driving part may drive the joint part so that the joint part moves along the target trajectory of the joint part, which is preset in the trajectory setting part. Here, the joint part may be driven according to the driving force provided by the driving part provided to the joint part, and the joint part may be driven by providing the preset driving force at each time point so that the joint part moves along the target trajectory of the joint part, and when the force of the rehabilitation trainee 10 is not applied to the joint part, the joint part may move along the target trajectory of the joint part.

Here, the driving force control part 140 may control the provided driving force of the driving part (or the driving force provided by the driving part) so that the movement of the joint part follows the target trajectory, may control the driving force provided by the driving part so that the movement of the joint part follows the target trajectory, and may compensate for the driving force provided by the driving part according to the force applied to the joint part by the rehabilitation trainee 10, which is obtained through the analysis of the interacting force in the characteristic analysis part 130. This may improve the effects of the rehabilitation by providing effective rehabilitation training.

The interaction measuring part 120 may include: a position measuring part that measures the position of the joint part driven along the target trajectory; and an action force calculating part that calculates the interacting force by using a difference between the position of the target trajectory and an actually measured position at each time point. The position measuring part may measure the position of the joint part driven to move along the target trajectory and also may measure the position of the joint part driven to move along the target trajectory through the position measuring part to detect that the joint part is deviated from the target trajectory due to an external force, such as the force applied to the joint part by the rehabilitation trainee 10 while the joint part is driven and also to compensate for and change (correct) the driving force provided by the driving part so that the movement of the joint part follows the target trajectory according to the difference in position from the target trajectory at each time point (or at the same time point). Thus, the optimal rehabilitation training may be provided, and the rehabilitation effect may be maximized. The position measuring part may include a position sensor.

the action force calculating part may calculate the interacting force by using the difference between the position of the target trajectory at each time point and the actually measured position, may know the actually measured position by measuring the position of the joint, and may calculate the interacting force by using the difference between the position of the target trajectory at each time point and the actually measured position. That is, the interacting force may be obtained without a torque sensor through the position measuring part and the action force calculating part. Thus, the manufacturing cost of the rehabilitation training device 100 may be reduced, and the torque sensor, which is relatively larger in volume and/or heavier than the position sensor used in the position measuring part, may be unnecessary to be mounted on the rehabilitation training robot 110, and thus, a volume and/or weight of the rehabilitation training robot 110 may be reduced, and the calibration process due to the use of the torque sensor may be eliminated.

The position measuring part may measure positions of the joint part at a first time point and a second time point after the first time point, and the action force calculating part may calculate the required driving force of the joint part at a first time between the first time point and the second time point using the position of the joint part at the second time point and may calculate the interacting force by subtracting the provided driving force of the driving part from the required driving force of the joint part at the first time.

Here, the position measuring part may measure the position of the joint part at regular intervals (or times) through the position measuring part, may obtain displacement of the joint part during a time (or in a section) between a previous time point (or cycle) and a current time point by the difference between a position of the joint part at the previous time point and a position of the joint part at the current time point, and may obtain a speed of the joint part during the time between the previous time point and the current time point by dividing the displacement of the joint part by the cycle (i.e., time). In addition, the speed of the joint part may be (further) divided by the cycle to calculate acceleration of the joint part during the time between the previous time point and the current time point. Here, the position measuring part may measure a position 11 of the joint part at the first time point while measuring the position of the joint part at regular intervals and may also measure a position 12' of the joint part at the second time point after one cycle (or first time) at the first time point.

In addition, the action force calculating part may calculate required driving force of the joint part at the first time between the first time point and the second time point using the (measured) position 12' of the joint part at the second time point and may measure the interacting force by subtracting the provided driving force of the driving part from the required driving force of the joint part at the first time point. The action force calculating part may obtain the displacement of the joint part at the first time between the first time point and the second time point by a difference between the (measured) position 12' of the joint part at the second time and the position 11 of the joint part at the first time point, may obtain a speed of the joint part at the first time by dividing the displacement of the joint part by the first time, and may obtain acceleration of the joint part at the first time by dividing the speed of the joint part (again) by the first time. Here, the required driving force of the joint part at the first time between the first time point and the second time point may be force that is actually applied to the joint part to move from the position 11 of the joint part at the first time point to the (measured) position 12' of the joint part at the second time point and may be calculated as a function of the acceleration of the joint part at the first time.

The action force calculating part may calculate the interacting force through the difference between the required driving force of the joint and the provided driving force of the driving part, may subtract the provided driving force of the driving part from the required driving force of the joint at the first time, and may calculate a magnitude and direction of the interacting force. For example, if the interacting force is a positive (+) value, the direction may be the same as the driving force provided by the driving part, and if the interacting force is a negative (-) value, the direction may be opposite to that of the driving force provided by the driving part. That is, when only the driving force of the driving part is provided without the force applied to the joint part by the rehabilitation trainee 10, the joint part has to move to the position 12 of the target trajectory at the second time point, but due to the interacting force (i.e., the force applied to the joint part by the rehabilitation trainee), the joint part may not move to the position 12 of the target trajectory at the second time point, but move to the (measured) position 12' of the joint part at the second time point.

The rehabilitation training device 100 according to the present invention may further include: a frictional force calculating part that calculates frictional force according to the speed of the joint part; and a gravity calculating part that calculates gravity acting on the joint part according to the movement of the joint part.

The frictional force calculating part may calculate the frictional force according to the speed of the joint part, may calculate the frictional force generated according to the movement of the joint part at each time point, and may calculate the frictional force using the speed of the joint part calculated by the action force calculating part. Here, the frictional force calculating part may be included in the action force calculating part or may be a separate configuration from the action force calculating part, but it is sufficient for the rehabilitation training device 100 if including the frictional force calculating part.

The gravity calculating part may calculate the gravity acting on the joint part according to the movement of the joint part, may calculate the gravity that is changed according to the change in the position of the joint part at each time point, and may calculate the gravity by using a joint angle of the joint part, which is measured (or obtained) according to the position of the joint part and a change in distance between the joint parts. Here, the gravity calculating part may be included in the action force calculating part or may be a separate configuration from the action force calculating part, but it is sufficient for the rehabilitation training device 100 if including the gravity calculating part.

As a result, the trajectory setting part may set the driving force at each time point by reflecting at least one of the frictional force, the gravity, inertial force, or deflecting force, which is generated according to the movement of the joint part at each time point, and the action force calculating part may calculate the interacting force by reflecting at least one of the frictional force, the gravity, the inertial force and the deflecting force. Thus, the action force calculating part may generate the interacting force more accurately, and the driving force control part 140 may precisely control the driving force provided by the driving part.

Thus, the rehabilitation training device 100 of the present invention may include the frictional force generating part and the gravity calculating part to reflect the frictional force and/or the gravity in the setting of the driving force at each time point and the calculation of the interacting force, thereby enabling the joint part to move in the optimized trajectory for the various rehabilitation trainees 10, and further improving the rehabilitation effect by providing the more optimized rehabilitation training.

The position measuring part may measure the position of the joint part at a cycle of 1 *µ*s to 10 ms. That is, the position measuring part may measure the position of the joint part at very short intervals of 1 µs to 10 ms, the action force calculating part may calculate the interacting force at the interval (or at each interval) at which the position of the joint part is measured, and the driving force control part 140 may provide the driving force of the driving part corrected (or changed) in real time at the next time (e.g., the second time) according to the interacting force calculated at each interval, thereby allowing the joint part to move continuously along the target trajectory. Thus, the joint part may move without a large difference from the target trajectory, and an actually measured trajectory that has almost no difference from the target trajectory may be formed.

If the position measuring part measures the position of the joint part at a cycle shorter than 1 *µ*s, a time taken to measure only the position of the object part so as to calculate (or obtain) the interacting force may not be secured, and thus, the driving force provided by the corrected driving part may not be provided at the next time, and if the position measuring part measures the position of the joint part at a cycle longer than 10 ms, a distance by which the position of the joint part deviates from the target trajectory increases, and thus, not only a distance to be corrected (or compensated) may increase, but also the joint part may not have continuous (and/or smooth) movement.

The characteristic analysis part 130 may include: an action force analysis part that analyzes the direction and magnitude of the interacting force; and a characteristic determining part that compares the direction of the interacting force with a driving direction of the joint part to determine the interacting force as the active or resistant. The action force analysis part may analyze the direction and magnitude of the interacting force. The direction and magnitude of the interacting force may be known by a value obtained by calculating the interacting force, the direction of the interacting force may be known by the signs (+ or -) of the value obtained by calculating the interacting force, and the magnitude of the interacting force may be known by a magnitude (or absolute value) of the value obtained by calculating the interacting force. For example, if the value obtained by calculating the interacting force is a positive (+) value, the direction of the interacting force may be the same as the direction of the driving force provided by the driving part, and if the value obtained by calculating the interacting force is a negative (-) value, the direction of the interacting force may be opposite to the direction of the driving force provided by the driving part.

The characteristic determining part may compare the direction of the interacting force with the driving direction of the joint part (i.e., the direction of the driving force provided by the driving part) to determine whether the interacting force is the active or the resistant. If the direction of the interacting force is the same as the driving direction of the joint part, it may be determined as the active, and if the direction of the interacting force is different from the driving direction of the joint part, it may be determined as the resistant. Even if the direction of the interacting force is slightly different from the driving direction of the joint part, when the interacting force assists the movement of the joint part in the driving direction of the joint part, the characteristic determining part may determine the interacting force as the active and may analyze the direction and magnitude of the interacting force to determine whether the interacting force assists the movement of the joint part in the driving direction of the joint part.

The driving force control part 140 may allow the driving force provided by the driving part to decrease rather than the set driving force at each time point when the interacting force is determined as the active, and may allow the driving force provided by the driving part to increase rather than the set driving force at each time point when the interacting force is determined as the resistant. The set driving force that has to be provided to the joint part at each time point to allow the joint part to move along the target trajectory may be preset, and when the interacting force is determined as the active, the rehabilitation trainee 10 may provide force to the joint part in the driving direction of the joint part, and thus, the driving force control part 140 may allow the provided driving force of the driving part to decrease rather than the set driving force and may provide the provided driving force of the driving part that decreases rather than the set driving force at each time point to the joint part.

In addition, when the interacting force is determined as the resistant, since the force applied by the rehabilitation trainee 10 to the joint part hinders the movement (or driving) of the joint part, the driving force control part 140 may allow the driving force provided by the driving part to increase rather than the set driving force to offset the force applied by the rehabilitation trainee to the joint part, thereby providing the driving force provided by the driving part, which increases rather than the set driving force, to the joint part.

Here, the driving force control part 140 may allow the provided driving force of the driving part to decrease or increase by (the amount of) the interacting force than the set driving force at each time point. Here, when the interacting force is determined as the active, while the provided driving force of the driving part decreases rather than the set driving force, the driving force control part 140 may allow the provided driving force to decrease by the interacting force rather than the set driving force at each time point so that the (measured) position of the joint part at the next time point is the same as the position of the target trajectory at the time point (or the same time point).

In addition, when the interacting force is determined as the resistant, while the provided driving force of the driving part increases rather than the set driving force, the driving force control part 140 may allow the provided driving force to increase by the interacting force rather than the set driving force at each time point so that the (measured) position of the joint part at the next time point is the same as the position of the target trajectory at the time point.

As a result, the joint part may move along the target trajectory as much as possible, and the joint part may form an actually measured trajectory that is almost (or very) similar to the target trajectory.

As described above, in the present invention, the interacting force between the rehabilitation trainee and the rehabilitation training robot may be analyzed to classify the characteristics of the interacting force, and the driving force provided to the driving part provided to the joint part may be controlled according to the characteristics of the interacting force, and thus, even if the rehabilitation trainee applies the force to the joint part, the joint part may move along the preset target trajectory of the joint part, and accordingly, the rehabilitation training may be performed with the training intention of the rehabilitation trainee may be considered to improve the rehabilitation effect. In addition, the position of the joint part driven to move along the target trajectory through the position measuring part may be measured to detect that the joint part is deviated from the target trajectory, and thus, the driving force provided by the driving part may be compensated and corrected so that the movement of the joint part follows the target trajectory, thereby providing the optimal rehabilitation training and maximizing the rehabilitation effect. In addition, since the interacting force is obtained without the torque sensor only by measuring the position of the joint part by the position measuring part, not only the manufacturing cost of the rehabilitation training device may be reduced, but also the torque sensor, which is relatively larger in volume and/or heavier than the position sensor used in the position measuring part, may be unnecessary to be mounted on the rehabilitation training robot, and thus, the volume and/or weight of the rehabilitation training robot may be reduced, and the calibration process due to the use of the torque sensor may be eliminated. That is, the interacting force may be obtained only by measuring the position of the joint part by the position measuring part to reflect the measured interacting force in real time in the control of the driving force provided by the driving part, thereby providing the optimal driving force provided by the driving part to the joint part according to the force applied to the joint part by the rehabilitation trainee so that the movement of the joint part follows the target trajectory. Particularly, the frictional force and/or the gravity in the setting of the driving force at each time point and the calculation of the interacting force may be reflected through the frictional force generating part and the gravity calculating part to enable the joint part to move in the optimized trajectory for the various rehabilitation trainees, and further improve the rehabilitation effect by providing the more optimized rehabilitation training.

Although preferred embodiments of the present invention have been described with reference to a number of illustrative embodiments thereof, the embodiments of the present invention are not limited to the foregoing embodiments, and thus, it should be understood that numerous other modifications and embodiments may be devised by those skilled in the art that will fall within the spirit and scope of the principles of this invention. Hence, the real protective scope of the present invention shall be determined by the technical scope of the accompanying claims.

## Claims

1. A rehabilitation training method comprising:
obtaining interacting force between a rehabilitation trainee and a rehabilitation training robot while the rehabilitation trainee wears the rehabilitation training robot having at least one joint part and the joint part is driven by a driving part;
classifying characteristics of the interacting force by analyzing the interacting force; and
controlling provided driving force of the driving part provided at the joint part according to the characteristics of the interacting force.

2. The rehabilitation training method of claim 1, wherein the obtaining the interacting force comprises driving the joint part to move along a preset target trajectory of the joint part, and
in the controlling the provided driving force of the driving part, the provided driving force of the driving part is controlled so that the movement of the joint part follows the target trajectory.

3. The rehabilitation training method of claim 2, wherein the obtaining the interacting force comprises:
measuring a position of the joint part being driven; and
calculating the interacting force using a difference between a position of the target trajectory and an actually measured position at each time point.

4. The rehabilitation training method of claim 3, wherein the measuring the position of the joint part comprises:
measuring a position of the joint part at a first time point; and
measuring a position of the joint part at a second time point after the first time point, and
the calculating the interacting force comprises:
calculating required driving force of the joint part at a first time between the first time point and the second time point by using the position of the joint part at the second time point; and
subtracting the provided driving force of the driving part from the required driving force of the joint part at the first time.

5. The rehabilitation training method of claim 4, wherein the first time ranges of 1 *µ*s to 10 ms.

6. The rehabilitation training method of claim 2, wherein the classifying the characteristics of the interacting force comprises:
analyzing a direction and magnitude of the interacting force; and
determining the interacting force as active or resistant by comparing the direction of the interacting force with a driving direction of the joint part.

7. The rehabilitation training method of claim 6, wherein the controlling the provided driving force of the driving part comprises:
providing the provided driving force of the driving part that decreases rather than set driving force at each time point, when the interacting force is determined as the active; and
providing the provided driving force of the driving part that increases rather than the set driving force at each time point, when the interacting force is determined as the resistant.

8. The rehabilitation training method of claim 7, wherein the providing the provided driving force of the driving part that decreases rather than the set driving force at each time point comprises decreasing by the interacting force from the set driving force at each time point, and
the providing the provided driving force of the driving part that increases rather than the set driving force at each time point comprises increasing by the interacting force from the set driving force at each time point.

9. A rehabilitation training device comprising:
a rehabilitation training robot comprising at least one joint part and a driving part configured to drive the joint part, the rehabilitation training robot being worn by a rehabilitation trainee;
an interaction measuring part configured to obtain interacting force between the rehabilitation trainee and the rehabilitation training robot;
a characteristic analysis part configured to analyze the interacting force and classify characteristics of the interacting force; and
a driving force control part configured to control provided driving force of the driving part, which is provided to the joint part, according to the characteristics of the interacting force.

10. The rehabilitation training device of claim 9, further comprising a trajectory setting part configured to set a target trajectory of the joint part along which the joint part moves,
wherein the driving force control part is configured to control the provided driving force of the driving part so that the movement of the joint part follows the target trajectory.

11. The rehabilitation training device of claim 10, wherein the interaction measuring part comprises:
a position measuring part configured to measure a position of the joint part driven along the target trajectory; and
an action force calculating part configured to calculate the interacting force using a difference between a position of the target trajectory and an actually measured position at each time point.

12. The rehabilitation training device of claim 11, wherein the position measuring part is configured to measure positions of the joint part at a first time point and a second time point after the first time point, and
the action force calculating part is configured to calculate required driving force of the joint part at a first time between the first time point and the second time point using the position of the joint part at the second time point and to calculate the interacting force by subtracting the provided driving force of the driving part from the required driving force of the joint part at the first time.

13. The rehabilitation training device of claim 12, further comprising:
a frictional force calculating part configured to calculate frictional force according to a speed of the joint part; and
a gravity calculating part configured to calculate gravity acting on the joint part according to the movement of the joint part,
wherein the trajectory setting part is configured to set set driving force at each time point by reflecting at least one of the frictional force, the gravity, inertial force, or deflecting force, which is generated according to the movement of the joint part at each time point, and
the action force calculating part is configured to calculate the interacting force by reflecting at least one of the frictional force, the gravity, the inertial force and the deflecting force.

14. The rehabilitation training device of claim 11, wherein the position measuring part is configured to measure the position of the joint part at a cycle of 1 *µ*s to 10 ms.

15. The rehabilitation training device of claim 10, wherein the characteristic analysis part comprises:
an action force analysis part configured to analyze a direction and magnitude of the interacting force; and
a characteristic determining part configured to compare the direction of the interacting force with a driving direction of the joint part to determine the interacting force as active or resistant.

16. The rehabilitation training device of claim 15, wherein the driving force control part is configured to:
allow the provided driving force of the driving part to decrease rather than set driving force at each time point, when the interacting force is determined as the active; and
allow the provided driving force of the driving part to increase rather than the set driving force at each time point, when the interacting force is determined as the resistant.

17. The rehabilitation training device of claim 16, wherein the driving force control part is configured to allow the provided driving force of the driving part to decrease or increase by the interacting force than the set driving force at each time point.
